# EUROPÄISCHE PATENTSCHRIFT

(11) **EP 2 925 506 B1**
(45) Veröffentlichungstag und Bekanntmachung des Hinweises auf die Patenterteilung: **24.10.2018**
(21) Anmeldenummer: 13792655.6
(22) Anmeldetag: 15.11.2013
(51) Int. Cl.: B29C 51/14, B60R 13/08

(54) **VERFAHREN ZUR HERSTELLUNG WENIGSTENS ZWEILAGIGER BAUTEILE**
METHOD FOR PRODUCING AT LEAST TWO-LAYER COMPONENTS
PROCÉDÉ DE RÉALISATION DE COMPOSANTS AU MOINS BICOUCHES

(30) Priorität: 30.11.2012 DE 102012222000
(43) Veröffentlichungstag der Anmeldung: 07.10.2015
(73) Patentinhaber: Adler Pelzer Holding GmbH, 58454 Witten (DE)
(72) Erfinder: NICOLAI, Norbert, 46514 Schermbeck-Gahlen (DE); PIATKOWSKI, Reimund, 44143 Dortmund (DE); RENKEN, Hartmut, 48249 Dülmen (DE); KRÖMER, Klaus, 26817 Rhauderfehn (DE); SCHULZE, Volkmar, 84069 Schierling (DE)
(74) Vertreter: dompatent von Kreisler Selting Werner - Partnerschaft von Patent- und Rechtsanwälten mbB
(86) Internationale Anmeldenummer: PCT/EP2013/073899
(87) Internationale Veröffentlichungsnummer: WO 2014/082869

(56) Entgegenhaltungen:
- US-A1- 2007 126 276

## Beschreibung

Die Erfindung betrifft ein Verfahren zur Herstellung eines wenigstens zweilagigen Bauteils als absorptive Verkleidung im Innen- und /oder Kofferraum oder für Bodenverkleidungen von Kraftfahrzeugen umfassend eine Oberware, und einen Absorber.

Kofferraumverkleidungen bestehen im Wesentlichen aus einem Oberflächenmaterial, insbesondere aus einer Textilie oder einem textilen Flächengebilde und einem rückseitigen Absorber, der beispielsweise auch als Versteifungsvlies tragende Eigenschaften haben kann. Als Absorber, Versteifungsvlies oder reiner Träger sind die unterschiedlichsten Materialien im Einsatz. Träger aus Kunststoff, und hier speziell spritzgegossene Träger werden nach der Formgebung kaschiert oder das textile Obermaterial mit dem Trägermaterial hinterspritzt. Eine andere Lösung stellen textilbeschichtete Kunststofffolien dar, welche durch Aufextrudieren des Kunststoffes als reiner Kunststoff oder mit anorganischen Mitteln als auch unterschiedlichen Fasern gefüllt auf das Textil hergestellt, und dann mittels Pressen verformt werden.

Eine spezielle Ausführung des Kunststoffs sind Polyolefinschäume, die vorgeformt kaschiert werden. Alternativ kann auch eine textile Oberfläche angeschäumt werden.

Bekannte Absorber, Isolationen die zum Versteifungsvlies bzw. Träger verpresst sind, umfassen unterschiedlichste Fasern (Kunststoff und Naturfasern) die mit einen Bindemittel thermoplastischer oder duroplastischer Natur im Platinenherstellungsprozess thermisch oder durch Nadeln oder bei der anschließenden Verarbeitung gebunden werden. Bekannte Bindemittel umfassen Polypropylen, Acrylate oder Harze unterschiedlicher Natur, wie auch (BiCo) Bikomponenten-Fasern die im Wesentlichen aus einem PET-Kern und oft einem coPET- Mantel bestehen.

Der thermoplastische Absorber und ein textiles Oberflächenmaterial werden erwärmt und dann im kalten Werkzeug verformt und abgekühlt. Je nach Verformungsgrad wird der Absorber, der gegebenenfalls auch tragende Eigenschaften für das Bauteil haben kann, partiell ausgedünnt und damit geschwächt. Um in diesen deformierten Bereichen die geforderten mechanischen Eigenschaften zu erreichen sind die nicht oder wenig deformierten Bereiche überdimensioniert. Damit hat das Bauteil ein höheres Gewicht, als festigkeitsmäßig notwendig.

Akustisch offene Bodenbeläge (Teppiche) umfassen von der Sichtfläche beginnend, beispielsweise Nadelvlies-, Dilours- oder Tufting-Teppiche mit einer Fasereinbindung. Zur Erzielung der notwendigen Steifigkeit ist mit dem Teppich meist ein Absorber bzw. ein komprimiertes Mischfaservlies fest verbunden. Der Teppich und der Absorber bzw. das komprimierte Mischfaservlies werden auf einer Verformungsanlage verformt und anschließend beschnitten. Der Absorber bzw. die Isolation werden getrennt hergestellt.

Schaumabsorber oder -isolationen stellen dabei eine Ausnahme dar; sie werden im Wesentlichen an den Teppich angeschäumt, was dann natürlich zu einem akustisch geschlossenen Teppich führt und dem Ziel -hochabsorptiv, strömungsoffen- nicht entspricht.

Als offene Absorber oder Isolationen sind Bauteile aus einer Faserfülltechnologie oder Airlay sowie Karde gelegte Vliese aus reinem PET oder Mischfasern bekannt. Bei den Vliesisolationen findet man unverformte (plane), (vor-)verformte Platinen sowie Isolationen, hergestellt insbesondere im Faser-Flock-Verfahren vor.

Die Platinen selbst können verformt werden, oder als Ausschnitte auf den Teppich geklebt werden. Nachteilig bei allen Verfahren ist der hohe Bedarf an Anlagen und die damit verbundenen notwendigen Arbeitsschritte.

Derartige Bodenverkleidungssysteme sind beispielsweise beschrieben in DE 10 2004 046 201 A1, DE 103 60 427 A1, DE 199 60 945 A1 und DE 10 2007 036 952 A1.

US 2007/126276 A1 offenbart ein Verfahren zur Herstellung zweilagiger Bauteile als absorptive Verkleidung im Innenraum von Kraftfahrzeugen, umfassend eine Oberware, und einen Absorber, wobei man
(a) einen vorgeformten Absorber in ein Dampf-/Vakuum-Werkzeug einbringt,
(b) die vorgeformte Oberware zum Absorber, der einen Binder enthält, in das Werkzeug einbringt,
(c) das Werkzeug schließt,
(d) durch Anlegen von Dampf von der Oberseite des Absorbers in dem Absorber den Binder aktiviert und Oberware und Absorber miteinander verbunden werden.

Der vorliegenden Erfindung liegt die Aufgabe zugrunde, eine Oberware mit strömungsdicht geschlossener Rückseite mit einem Absorber bzw. einer Isolation ohne vorherige Platinenherstellung des Absorbers bzw. der Isolation zu verbinden, indem der Absorber bzw. die Isolation durch Flocken von Absorbermaterial in einer Form hergestellt wird, wodurch über das Bauteil definierte Materialanhäufungen erzeugt werden können, durch Verpressen in einem Werkzeug mit definierten Kavitätenabstandsverteilungen, definierte Dicken- und damit definierter Steifigkeit / Festigkeit und definierten akustischen Eigenschaften erreicht werden; wobei das geflockte Absorbermaterial mit der Oberware in die Endkontur in einem Schritt verformt (verpresst) wird, und die Oberware selbst gebunden bzw. die Oberware mit dem Absorber bzw. der Isolation gleichzeitig verbunden werden.

Die vorgenannte Aufgabe wird in einer ersten Ausführungsform gelöst durch ein Verfahren zur Herstellung eines wenigstens zweilagigen Bauteils als absorptive Verkleidung im Innen- und /oder Kofferraum oder für Bodenverkleidungen von Kraftfahrzeugen umfassend eine Oberware,
und einen Absorber, dadurch gekennzeichnet, dass man
(a) ein in einer Flockbox einseitig geformtes Absorbermaterial in ein Dampf-/Vakuum-Werkzeug einbringt,
(b) eine platinenförmig zugeschnittene Oberware mit ihrer strömungs-geschlossenen Unterseite zum Material des Absorbers, das einen Binder enthält, in das Werkzeug einbringt,
(c) das Werkzeug schließt,
(d) durch Anlegen von Dampf von der Unterseite des Absorbermaterials die Oberware verformt, im Absorbermaterial den Binder aktiviert und Oberware und Absorbermaterial miteinander verbunden werden,
e) den Dampfdruck durch geringeren Druck auf der Oberseite gegenüber dem Druck auf der Unterseite des Absorbermaterials abbaut und
(f) anschließend das Bauteil in einem Kalibrierwerkzeug oder einer Ablageschale kühlt.

Je nach Bauteil können gegenüber den im Stand der Technik bekannten Verfahren unterschiedliche Herstellungsschritte eingespart werden.
Bei einer Seitenverkleidung für einen Kofferraum eines Kraftfahrzeuges mit textilem Absorber (die Isolation wird hier zum Absorber verpresst) kann beispielsweise der ganze Vorgang der Platinenherstellung wegfallen.

Mit der erfindungsgemäßen Herstellungstechnologie ist es möglich, definiert dort Absorbermaterial einzubringen, wo es anforderungsgemäß notwendig ist.

So kann bei gleichem Aufbau gegenüber der Platinenverformung einer Isolation bis zu 20 Gew.-% Material eingespart werden, da an Stellen wo kein Material notwendig ist, dieses weggelassen werden kann.

Eine nahezu endkonturgenaue Füllung der Flockbox mit dem Absorbermaterial reduziert den Abfall gegenüber einer Platinenverformung nochmals um mehr als 10 Gew.-%. Durch Saugverfahren (Faser-Flock-Technologie im Saugverfahren) können Materialkombinationen mit unterschiedlichen Dicken realisiert werden, die in einer konventionellen Herstellung nicht möglich sind.

Mit einem schichtweisen Aufbau unterschiedlicher Materialien durch Faser-Flock-Technologie kann eine Kopplung von mechanischen und akustischen Eigenschaften realisiert werden.

Das Material, aus dem der Absorber bzw. die Isolation geformt wird, umfasst insbesondere einen thermoplastischen Binder in Faserform (PP, PET-BiCo, PE und weitere an sich bekannte Materialien) und insbesondere Füllmaterial, wie aufgeschäumtes PP (EPP), aufgeschäumtes PS (EPS), Kunststofffasern, Naturfasern, stückiges Füllmaterial aus Kunststoff (PUR-Chips) oder natürliche Stoffe (z.B. Korkgranulat). Alle Binder oder Füllmaterialien können alleine oder in unterschiedlichen Mischungen vorliegen.

Der Binder wird in der Regel mit dem Füllmaterial homogen vermischt und unter Verwendung eines Luftstromes zum konturierten, luftdurchlässigen Vorformwerkzeug (Flockbox) transportiert. Auf diesem wird das Gemisch entsprechend den Erfordernissen in der Kontur und der Dicke abgelegt.

Das somit vorgeformte Absorbermaterial bzw. Isolationsmaterial wird in der Regel mittels eines Roboters in ein Werkzeug abgelegt. Über das vorgeformte Absorbermaterial bzw. Isolationsmaterial wird eine Oberware mit einer Dampf-Vakuum strömungsdicht geschlossenen Rückseite, beispielsweise ein entsprechend platinenförmig zugeschnittener Dekorstoff insbesondere in einer Spannvorrichtung zugeführt. Die Spannvorrichtung befindet sich vorzugsweise außerhalb des Werkzeuges oder an diesem außen montiert und behindert das Schließen des Werkzeuges nicht.

In speziellen Bauteilen / Materialstrukturen weist die Oberware keine strömungsdicht geschlossene Rückseite sondern eine strömungsoffene Rückseite mit hohem Strömungswiderstandauf. Eingesetzt werden hierbei beispielsweise mikroperforierte Kunststofffolien sowie Vliese mit hohem Strömungswiderstand.

In einer besonderen Ausführung besitzt die Spannvorrichtung einzelne oder mehrere bewegliche Klemmzangen, über die die Oberware gezielt gespannt bzw. nachgebend in das Werkzeug freigegeben werden kann.

Beim Schließen des Werkzeuges werden die Oberware und der Absorber bzw. die Isolation in ihre finale Form gebracht. Entsprechend der gezielt lokal angehäuften Materialmenge und der geforderten Dicke entstehen unterschiedliche Dichten und damit unterschiedliche mechanische und akustische Eigenschaften des Absorbers bzw. der Isolation.

Die Oberware umfasst ein Flachnadelvlies, Dilours, Velours, einschließlich deren Zwischenstufen, ein Gewebe, ein Gewirke oder eine Kunststofffolie. Die Oberware kann gegebenenfalls deckseitig und/ oder unterseitig mit einem Mischfaservlies versehen sein. Desweiteren könnte auch ein vernadeltes Recycling-Sandwich-Vlies mit folgenden Kenndaten eingesetzt werden:
100 bis 250 g/m2 Mischfaservlies (PET/PP oder PP / CO / PET) 350 bis 800 g/m2 Recyclat-Granulat (PET, Korngrösse 1 bis 4 mm) 100 bis 250 g/m2 Mischfaservlies (PET/PP oder PP / CO / PET)

In besonderer Abwandlung des Verfahrens wird ein aufgeschäumter Binder (z.B. EPP) ohne weiteren Füllstoff, wie beschrieben, vorgeformt und thermisch behandelt.

Das Formwerkzeug ist insbesondere dadurch gekennzeichnet, dass das für das Teil erforderliche Material dicht, formschlüssig, in der Kavität eingeschlossen wird.

In mindestens einer Werkzeughälfte des Formwerkzeugs, insbesondere im Bereich der Unterseite des Absorbers bzw. der Isolation befindet sich ein Bohrungssystem, durch das Dampf in die Kavität ein und wieder ausgeleitet werden kann.

Beide Werkzeughälften werden über ein geeignetes Beheizungssystem auf eine gleiche oder unterschiedliche Temperatur beheizt. Zunächst wird aus der Kavität mittels eines über das Bohrungssystem angelegten Vakuums ein großer Teil der eingeschlossenen Luft abgesaugt. Danach erfolgt die Erwärmung des eingeschlossenen Materials mittels Dampf. Abschließend wird der Dampf aus der Kavität weitestgehend abgesaugt und dadurch das Teil im Inneren gekühlt.

Nachfolgend wird die Erfindung anhand eines Ausführungsbeispieles näher erläutert.

Das Absorbermaterial bzw. Isolationsmaterial bestehend aus einem Gemisch aus BiCo-, PET- und Baumwollfasern sowie PUR-Schaumflocken, wurde in einer Flockbox mittels der Faser-Flock-Technologie im Saugverfahren, geflockt.

Anschließend wurde das vorgeformte Absorber- bzw. Isolationsmaterial mittels eines Greifers entnommen und in einem Dampf-/Vakuum-Werkzeug abgelegt.

Die Oberware, ein 540 g/m² PET-Diloursteppich mit 20 Gew.-% BiCo-Anteil und einer rückseitigen 90 µm PE/PA/PE-Folie wurde mittels Spannrahmen in ein offenes Dampf-/Vakuum-Werkzeug eingeführt und auf dem Absorber- bzw., Isolationsmaterial abgelegt.

In diesem Ausführungsbeispiel war die Folie nicht mit der Oberware verbunden. Die Oberware wurde im Strahlerheizfeld erwärmt und die Folie sowie die Oberware wurden in das Dampf-/Vakuum-Werkzeug eingelegt (hier per Hand).

In praxi wird die Oberware, die gegebenenfalls rückseitig ein (Mischfaser- oder Recycling-Sandwich-) Vlies als Träger enthält vorab mit der Folie kaschiert oder es wird eine Extrusionsschicht aufgebracht.

Anschließend wurde das Werkzeug geschlossen; die obere Werkzeughälfte hatte Raumtemperatur, die untere war auf 120°C temperiert und ist vakuumfähig.

In diesem Ausführungsbeispiel wurde an der Oberware kein Vakuum gezogen.

Sobald das Werkzeug geschlossen war, wurde über die untere Werkzeughälfte für etwa 3 s Vakuum gezogen, danach erfolgte für etwa. 15 s eine Beaufschlagung mit Dampf und anschließend wurde wieder für etwa 3 s ein Vakuum gezogen.

Nach einer Zykluszeit von ca. 40 s, inbegriffen das Schließen und Öffnen des Werkzeuges, war der Formgebungsprozeß beendet und die Oberware mit dem Absorber bzw. der Isolation fest verbunden.

Das fertige Bauteil wurde nun in der Kühlschale abgelegt.

## Patentansprüche

1. Verfahren zur Herstellung eines wenigstens zweilagigen Bauteils als absorptive Verkleidung im Innen- und /oder Kofferraum oder für Bodenverkleidungen von Kraftfahrzeugen umfassend eine Oberware,
und einen Absorber, **dadurch gekennzeichnet, dass** man
(a) ein in einer Flockbox einseitig geformtes Absorbermaterial in ein Dampf-/Vakuum-Werkzeug einbringt,
(b) eine platinenförmig zugeschnittene Oberware mit ihrer strömungs-geschlossenen Unterseite zum Material des Absorbers, das einen Binder enthält, in das Werkzeug einbringt,
(c) das Werkzeug schließt,
(d) durch Anlegen von Dampf von der Unterseite des Absorbermaterials die Oberware verformt, im Absorbermaterial den Binder aktiviert und Oberware und Absorbermaterial miteinander verbunden werden,
e) den Dampfdruck durch geringeren Druck auf der Oberseite gegenüber dem Druck auf der Unterseite des Absorbermaterials abbaut und
(f) anschließend das Bauteil in einem Kalibrierwerkzeug oder einer Ablageschale kühlt.

2. Verfahren nach Anspruch 1, **dadurch gekennzeichnet, dass** man die Oberware im kalten oder erwärmten Zustand in das Werkzeug einbringt.

3. Verfahren nach Anspruch 1 oder 2, **dadurch gekennzeichnet, dass** man die Oberware mit einer außerhalb des Werkzeugs befindlichen Spannvorrichtung in das Werkzeug einbringt.

4. Verfahren nach einem der Ansprüche 1 bis 3, **dadurch gekennzeichnet, dass** man eine textile Oberware gegebenenfalls mit einem Mischfaservlies oder einem Recycling-Sandwich-Vlies einsetzt.

## Claims

1. A method for producing an at least two-layer component as an absorptive lining in the interior and/or trunk or for floor coverings of motor vehicles, comprising a top material and an absorber, **characterized in that**:
(a) an absorber material molded on one side in a flock box is introduced into a steam/vacuum mold;
(b) the top material cut into blanks is introduced into the mold with its flow-closed side facing towards the material of the absorber, which contains a binder;
(c) the mold is closed;
(d) by applying steam from the lower side of the absorber material, the top material is deformed, the binder in the absorber material is activated, and the top and absorber materials are bonded to one another;
(e) the steam pressure is reduced by a lower pressure on the upper side as compared to the pressure on the lower side of the absorber material; and
(f) the component is subsequently cooled in a calibrating mold or deposit tray.

2. The method according to claim 1, **characterized in that** said top material is in a cold or heated state when introduced into said mold.

3. The method according to claim 1 or 2, **characterized in that** said introducing of the top material into the mold is effected by means of a tenter device that is provided outside the mold.

4. The method according to any of claims 1 to 3, **characterized in that** a textile top material is employed, optionally with a mixed fiber web or a recycling sandwich web.

## Revendications

1. Procédé pour la fabrication d'un élément à au moins deux couches en tant que revêtement absorptif dans l'intérieur et/ou dans le coffre ou pour revêtement de sol d'automobiles, comprenant une nappe supérieure et un absorbeur, **caractérisé en ce que** l'on
(a) introduit un matériau absorbeur, moulé sur un côté dans une boîte à flocons, dans un moule à vapeur/sous vide,
(b) introduit une nappe supérieure coupée en ébauche dans le moule, avec son côté inférieur, fermé à l'écoulement, faisant face au matériau de l'absorbeur qui contient un liant,
(c) ferme le moule,
(d) déforme la nappe supérieure en appliquant de la vapeur à partir du côté inférieur du matériau de l'absorbeur, le liant dans le matériau de l'absorbeur est activé, et la nappe supérieure et le matériau de l'absorbeur sont reliés l'un à l'autre,
(e) réduit la pression de la vapeur par le fait que la pression sur le côté supérieur est inférieure à la pression sur le côté inférieur du matériau de l'absorbeur, et
(f) fait refroidir ensuite l'élément dans un moule de calibrage ou dans un bac de rangement.

2. Procédé selon la revendication 1, **caractérisé en ce que** l'on introduit la nappe supérieure dans le moule dans un état froid ou réchauffé.

3. Procédé selon la revendication 1 ou 2, **caractérisé en ce que** l'on introduit la nappe supérieure dans le moule à l'aide d'un dispositif de serrage qui est procuré à l'extérieur du moule.

4. Procédé selon l'une quelconque des revendications 1 à 3, **caractérisé en ce que** l'on utilise une nappe textile supérieure éventuellement avec un tissu non tissé à fibres mixtes ou un tissu non tissé de recyclage en sandwich.
